Europäisches Patentamt

(19) European Patent Office

Office européen des brevets

(11) EP 0 600 037 B1

(12) EUROPEAN PATENT SPECIFICATION

(45) Date of publication and mention
of the grant of the patent:
22.05.1996 Bulletin 1996/21

(51) Int. Cl.⁶: **B60C 23/00**

(86) International application number:
PCT/US92/07296

(21) Application number: 92919475.1

(22) Date of filing: 27.08.1992

(87) International publication number:
WO 93/03936 (04.03.1993 Gazette 1993/06)

(54) **TIRE PRESSURING AND REGULATING APPARATUS**

PUMPEINRICHTUNG ZUR EINHALTUNG DES REIFENDRUCKS

APPAREIL DE GONFLAGE SOUS PRESSION D'UN PNEU ET DE REGULATION DE LA PRESSION

(84) Designated Contracting States:
**AT BE DE ES FR GB GR IE IT SE**

(30) Priority: 27.08.1991 US 750606
29.05.1992 US 891410

(43) Date of publication of application:
08.06.1994 Bulletin 1994/23

(73) Proprietor: **CYCLOID COMPANY**
**Pittsburgh, PA 15212 (US)**

(72) Inventor: **RENIER, Grant, J.**
**Allison Park, PA 15101 (US)**

(74) Representative: **Moore, Derek et al**
**Jensen & Son**
**70 Paul Street**
**London EC2A 4NA (GB)**

(56) References cited:
DE-A- 2 813 601          FR-E-    2 008
GB-A-   429 262          US-A- 1 679 505
US-A- 1 887 715          US-A- 1 930 041
US-A- 2 055 983

**Description**

1. Field of the Invention: The present invention relates to an apparatus to pressurize a pneumatic tire during rotation thereof and, more particularly, the present invention provides tire pressurizing and regulating apparatus attachable to the pneumatic tire at a site eccentric to rotation of the tire for utilizing a force to pressurize air to control the inflation of the tire during motion thereof.

2. Description of the Prior Art: While not so limited, the present invention provides a pneumatic pump constructed for attachment to an air supply valve stem of a pneumatic tire of an automobile or the like, to pressurize and, if desired, control the tire pressure at a predetermined pressure. In United States Patent No. 4,349,064 there is disclosed a tire pump mounted within a tire. A piston of the pump moves radially with respect to the rim. The pump is mounted on the tire rim and is actuated by centrifugal force to draw in and pressurize atmospheric air as the tire rolls along the ground. When the pressure within the tire reaches a pre-set level the air in the tire is recirculated through the pump to prevent the buildup of excessive pressure. Such a system requires permanent attachment of the pump to the rim of the wheel, modification of the wheel structure, and removal of the tire in order to service or replace the pump.

Other known centrifugally-operated pump regulators are described in United States Patent No. 4,570,691 wherein the pump is secured to the wheel rim interiorly of the tire and in United States Patent No. 4,651,792 wherein the pump is secured to the interior of the tire. Further, United States Patent No. 2 055 983 discloses an apparatus for pressurising a pneumatic tire comprising the features of the first part of claim 1. These pumps suffer from disadvantages similar to those associated with United States Patent No. 4,349,064. Furthermore, all of the aforementioned pumps/regulators operate exclusively on the principal of harnessing and utilizing only centrifugal force, a force which is not cyclic so that the pump must embody a design to operate independent of wheel translation.

Centrifugal and gravitational forces resolve to a resultant force that is ever changing during each rotation at all points eccentric from the axis of rotation of a rolling vehicle wheel. Hence, an advantage exists for an apparatus for harnessing and utilizing the locus of forces at a location eccentric from an axis of rotation of a rolling body, particularly, a vehicle wheel or the like. Such an apparatus can be mounted to a vehicle wheel and advantageously used, inter alia, to power a pump for pressuring and, if desired, regulating the pressure of a pneumatic vehicle tire. Also, gravitational forces occur at the points eccentric to the axis of rotation of a rolling vehicle wheel which can be advantageously utilized to both position a means for effecting a working stroke and for causing the operation of a pneumatic pump.

The forces driving this kind of pump are forces that are normally imparted to on the valve of a rotating tire while a vehicle is in motion. The variability of these forces during each complete revolution of the wheel are sufficient to impart the reciprocal motion to a piston type pump for vehicle speeds above a certain minimum speed of about 10 miles per hour, for example. The pressurizing of a low volume of air to a predetermined pressure by the pump can be controlled by diverse means such as a pressure control valve to maintain the tire pressure at a desired level required by present day standards. The input of air pressure from the pump may, if desired, be applied in opposition to the pneumatic pressure of the tire such that the tire pressure is increased or by a reverse flow of air, a small volume of air can be exhausted through a pump to the atmosphere. In this mode of operation, the tire pressure is reduced incrementally according to the magnitude of pressurization of air by the pump. This enables a pump construction to achieve and maintain a predetermined tire pressure according to operating parameters for the tire such as radius rotation for the tire, desired tire pressure and air pressure volume of the tire.

There are significant benefits from such a system to the owner of a vehicle whether it is an automobile, motorcycle or truck. First, the maintenance of the correct tire pressure will protect a tire from over or under inflation and result in its longer life for the tire. Second, this system, when applied to all wheels of a vehicle, will maintain even and balanced inflation in all tires and allow for easy and safe handling of the vehicle. Incorrect tracking of the vehicle due to uneven tire pressure will be eliminated. Tire wear will be improved relatively constant and balanced to all tires over their useful life. Lastly, the maintenance of correct tire pressure will increase gas mileage of the vehicle and provide a further saving to the operator. It has been reported by the Federal Department of Transportation that 2 million gallons of gasoline a day could be saved if all motor vehicles on the road were to operate with correct tire pressures.

It is an object of the present invention to provide apparatus for harnessing and utilizing forces at a location eccentric from the axis of rotation of a vehicle wheel for pressurizing and regulating the air pressure of a pneumatic tire carried by the wheel.

It is a further object of the present invention to provide a readily accessible pneumatic tire pump/regulator which can be manufactured for incorporation as part of or for releasably attachment to existing valve stem structure for a pneumatic tire.

It is a further object of the present invention to provide a pneumatic tire pump/regulator requiring no modification of either the vehicle wheel or the pneumatic tire.

A further object of the present invention is to provide an apparatus for harnessing and utilizing gravitational forces generated at a location eccentric from the axis of rotation of a vehicle wheel for pressurizing and regulating the pressure of a pneumatic tire carried by the wheel, wherein gravitational forces are used to both position a pressure creating means in an operating position and for effecting operation thereof, and wherein the apparatus will not be adversely affected by centrifugal forces or forces produced by acceleration or deceleration.

Another object of the present invention is to provide for a pneumatic tire pump/regulator to be mounted on the wheel valve stem of an inflatable vehicle tire whereby pump/regulator is tangentially positioned relative to the path of rotation of the tire and stem and capable of providing two pumping strokes per revolution of the wheel.

It is another object of the present invention to provide a double action piston cylinder device attachable to the valve stem of a pneumatic tire, wherein the piston is arranged tangentially to the rotational path of the stem, and wherein the piston will be positioned by gravitational force generated by the system in two working stroke positions during a given rotation of the tire, and when so positioned the piston will be displaced by gravity to effect the two working strokes.

In accordance with the present invention there is provided an apparatus for pressurising a pneumatic tire mounted on a wheel, said apparatus comprising:

a displacement type air pump including an oscillating unitary free piston mass reciprocal along a line by forces occurring with the rotational motion of a wheel for generating air under pressure;

bearing means for support of said piston mass during oscillation thereof within said pump;

mounting means adapted for attaching said pump to a pneumatic tire wheel; and

connection means adapted for introducing air under pressure generated from said pump into a pneumatic tire mounted on a wheel, characterised in that the bearing means are antifrictional and the pump is mounted with said line of piston reciprocation positioned offset from centre and tangential with respect to a path of wheel rotation.

Still other objects and advantages of the present invention will become apparent when read in light of the accompanying drawings in which:

Figure 1 represents a portion of a cycloid path generated by a point eccentric to the central axis or axle of a rolling circular object;

Figure 2 is a graphical representation of the radial acceleration and the gravitational acceleration of the valve stem whose path is illustrated in figure 1;

Figure 3 is a graphical representation of the magnitude of the resultant radial force deviations or with angular changes in degrees of wheel rotation;

Figure 4 is a graphical representation of the displacement volume of air in relation to vehicle velocity;

Figure 5 is a schematic illustration of one embodiment of applicants invention;

Figures 6A, 6B and 6C are schematic illustrations of pump stroke changes occurring with wheel rotation;

Figure 7 is a view similar to Figure 5 and illustrating a second embodiment of cushion device in the pump of the present invention;

Figure 8 is a third embodiment of a cushion device in the pump of the present invention;

Figure 9 is an enlarged illustration of a dual cushion pump embodying the features of the present invention;

Figures 10 and 11 are schematic illustrations of the operation of the dual cushion pump shown in Figure 9;

Figure 12 is a schematic front view of a common and well known tire, wheel and valve stem assembly, to which the apparatus of the present invention has been associated in a working position;

Figure 13 is a longitudinal sectional view of the preferred embodiment of a pneumatic tire pump/regulator constructed in accordance with the present invention which is releasably attachable to a vehicle wheel valve stem,

Figure 14 is a sectional view taken on lines 14-14 of Figure 13, and

Figure 15 is a sectional elevational view of a second embodiment of a pneumatic tire pump/regulator constructed in accordance with the present invention which is releasably attachable to a vehicle wheel valve stem.

## DESCRIPTION OF THE PREFERRED EMBODIMENTS

A mathematical model is useful for determining the magnitude of the resultant force of centrifugal and gravitational forces acting on a tire valve stem. As will be seen, the resultant force varies with vehicle velocity, translational, as well as magnitude of rotational speed of the valve stem about the rotational axis of the wheel. Essential to the invention is the fact that the resultant force varies cyclically with each rotation of a wheel.

The model simulation beings with a consideration of a point on a revolving wheel independent of translational advancement of wheel across a surface and with or without slip. The point on the wheel is assumed remote to the axis of rotation and is the focus of the resultant of two forces. One force centripetal acceleration "a" acting on a mass located at the point on a wheel in a direction extending from the center of wheel rotation toward perimeter of the wheel. The second force is gravity. The magnitude of the first force is a function of the linear velocity "v" of the point at a distance from the wheel axis "r". Thus centripetal acceleration is given by the equation:

$$a = v^2 / r \qquad \text{EQUATION 1}$$

In terms of instantaneous angular speed "$\Omega$", centripetal acceleration is given by the equation:

$$a = r\Omega^2 \qquad \text{EQUATION 2}$$

Using equation 1 as basis, one can derive linear velocity v in terms of vehicle velocity V, the radius of the point on the wheel r and the radius of the wheel R as follows:

$$v = V r/R \qquad \text{EQUATION 3}$$

The centripetal force Fc is a vector with its direction perpendicular to a line passing through the wheel axis and its magnitude as a function of centripetal acceleration a and mass m as follows:

$$Fc = ma \qquad \text{EQUATION 4}$$

The centripetal force can than be calculated as a function of vehicle velocity, the radii and mass by combining equation 1 and 3 in equation 4 as follows:

$$Fc = mV^2/R^2 \qquad \text{EQUATION 5}$$

The pump of the present invention is driven by a reciprocal piston responsive to a resultant force that includes a centripetal force vector which must be, by convention, reversed 180° to point outwardly from the wheel axis and called centrifugal force.

The direction of the force vector is not always on a line passing through the wheel axis. During vehicle acceleration and deceleration the force vector will be a few degrees in front of or behind the wheel axis, respectively, when considering the direction of movement by the vehicle. However, the affects of this additional vector component on the pump is minor and of little additional benefit or limitation to the pump operation, even under high rates of vehicle acceleration and deceleration. The objective of maintaining tire pressure is achieved by harnessing readily and continuously available forces. Extreme changes to vehicle velocity may cause the pump to momentarily cease operation and resume normal operation when the extreme changes subside.

As identified above, the other force acting on a point mass on the rim spaced from the rotational axis of the wheel is gravitation (Fg). This force vector has a constant magnitude of 386.40 inches per second squared with a vertical down direction acting on the mass. As the wheel rotates, the gravitational force is added to or subtracted from the centripetal force depending on the angle of rotation. According to the mathematical model at 0° of rotation there is a state where the point on the wheel is on a line passing through the wheel rotational axis and a point on the wheel in contact with the ground surface.

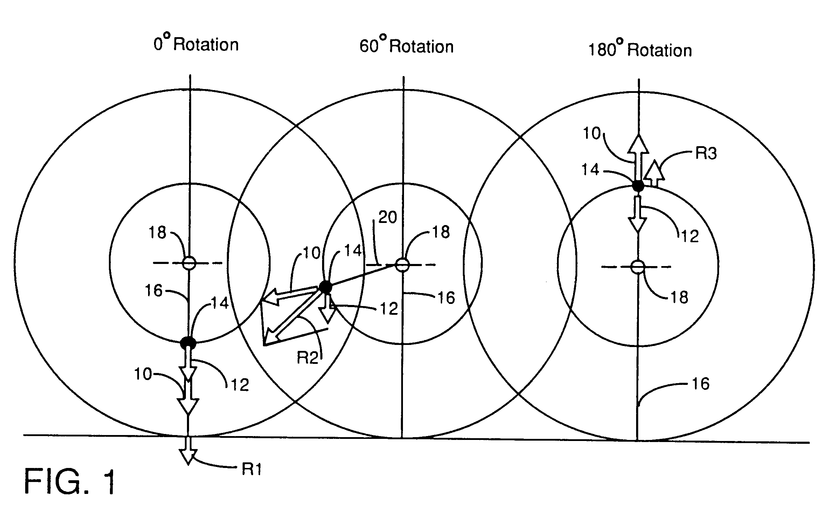

A part of the Figure 1 illustration shows that at 0° rotation, the centrifugal force vector indicated by arrow 10 and gravitational force vector indicated by arrow 12 complement each other and exert a combined resultant force R1 acting on a point 14 within a vertical plane 16 spaced from and containing the wheel rotational axis 18. The centrifugal force vector 10 and gravitational force vector 12 at 60° rotation of the wheel diverge at an angle of 60° with the gravitational force remaining vertical and parallel in plane 16. The centrifugal force acts in a plane 20 passes radially between axis 18 and point 14. The resultant force vector R2 has decreased in magnitude and changed direction when compared with the resultant force vector R1 at 0° rotation. At 180° rotation, the vector of the gravitation force vector 12 is subtracted from the vector of the centrifugal force 10. The resultant force vector R3 is now directed in the vertical plane 16 in an upward direction away from wheel axis 18; assuming that the vehicle velocity is sufficient to impart a centrifugal force vector greater than the gravitational force vector. This generally occurs at vehicle velocities above 7 miles per hour given present day typical tire dimensions.

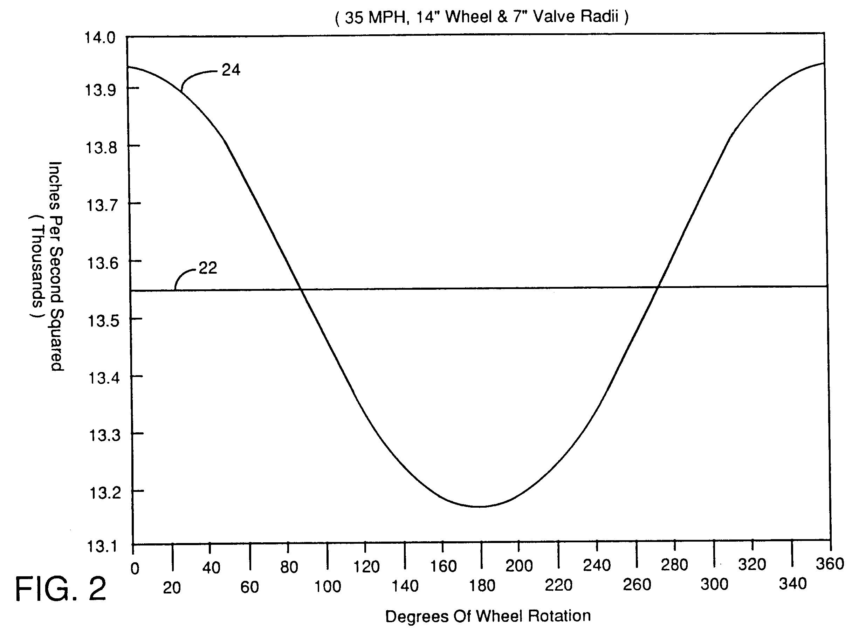

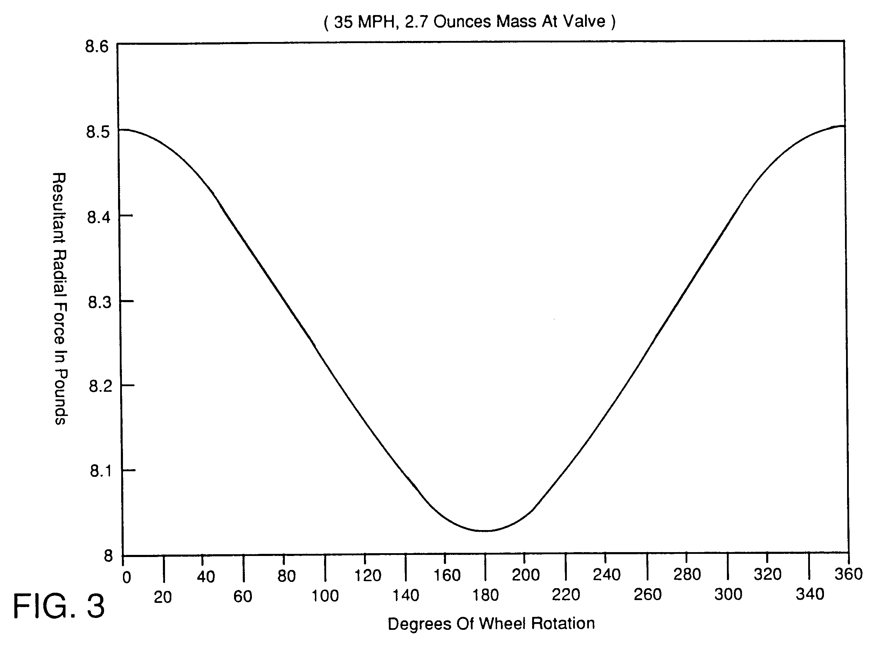

Graph line 22 in Figure 2 illustrates the constant magnitude of the centrifugal (radial) acceleration. Graph line 24 illustrates the combination of centrifugal and gravitational accelerations in inches per second squared for an assured vehicle traveling 35 miles per hour, a wheel radius of 14 inches and a valve radius of 7 inches. The sinusoidal nature of graph line 24 demonstrated the magnitudinal change to acceleration. The cyclic effect of the gravitational force on the radially directed centrifugal force for degrees of rotation from 0° to 180° is the inverse but repeated for degrees of rotation from 180° to 360°. As can be seen from Figure 3, the magnitude of resultant force ever changes as a function of the included angle between the gravitational and centrifugal forces. The pump of the present invention embodies a construction of parts for operating such that centrifugal force vector acting on the pump is large in relation to the gravitational force vector.

The graph line in Figure 3 displays the variation of the resultant force of the combined acceleration from Figure 2 acting on a mass of 2.7 ounces located at the wheel valve. At 35 miles per hour, the force variance is approximately 6% of the minimum force and is directed radially away from the wheel axis. As vehicle velocity increases, the variance becomes a smaller percentage of the minimum resultant force.

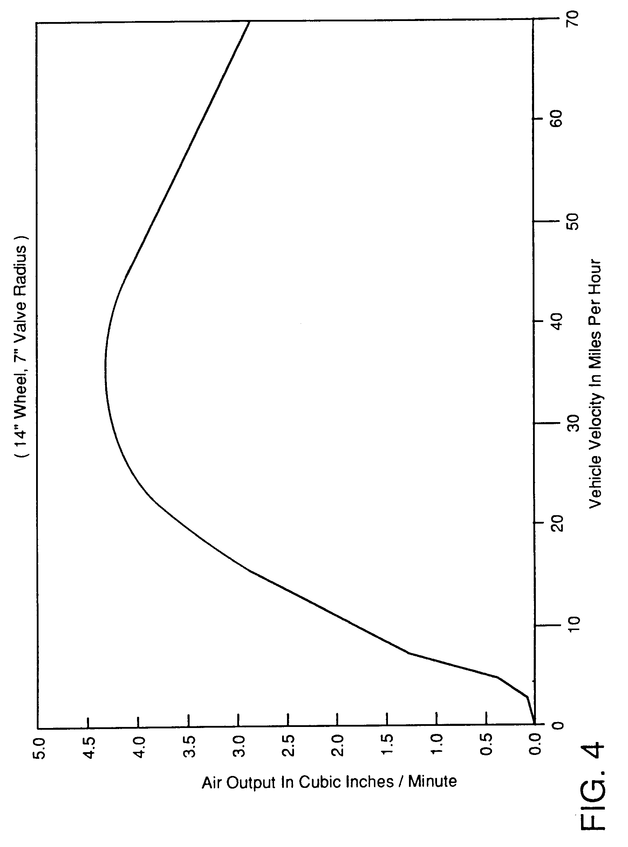

The resultant radial force of Figure 3 forms the basis for the graph line in Figure 4 to demonstrate the effect of the variation to the volume of air that can be pumped over vehicle velocities ranging from 0 to 70 miles per hour. It is preferred to utilize a pump design wherein the effective compressed air output occurs at vehicle speeds from 30 to 50 miles per hour, which represent the speeds driven by the average commuting driver. The design can be modified to provide higher outputs at other velocity ranges depending on the expected use of the vehicle. The graph of Figure 4 also demonstrates that at a speed of up to about 3 miles per hour, the pump out-put will be zero as the vehicle speed increases from 3 miles per hour, the pump out-put dramatically increases to useful air volumes.

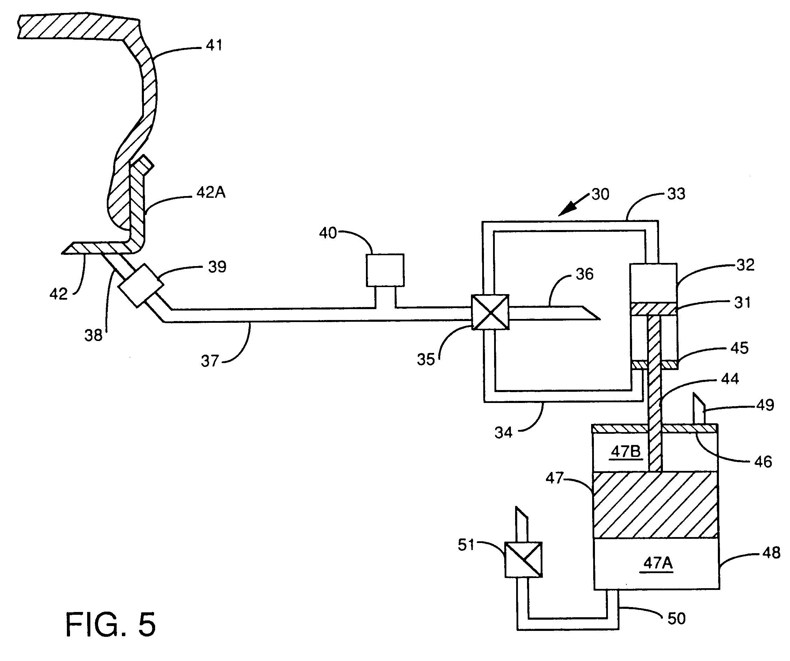

Turning now to Figure 5, there is illustrated a pump apparatus 30 embodying the features of the present invention. The pump apparatus includes piston 31 mounted to reciprocate in a cylinder 32 which is connected at the opposite ends of the cylinder by air ducts 33 and 34 to a control valve 35. Valve 35 is preferably an air pilot pressure operated valve responsive to the pressurized air in ducts 33 and 34. The valve 35 functions to control the supply atmospheric air in a duct 36 to ducts 33 and 34 as the piston 31 reciprocates in the cylinder from end to end between the openings to ducts 33 and 34. When atmospheric air is fed to the piston and cylinder assembly, pressurized air is directed by valve 35 from duct 37 to an air inlet port of a valve stem 38. Duct 37 and valve stem 38 are releasably connected together by a connector which includes a threaded collar 39. As with this embodiment and the embodiments described hereinafter, the pump apparatus is secured in a fixed position to the valve stem so that the piston supplying pressurized air to the tire reciprocates to the cylinder along a path that is always parallel to the radial line extending between the rotational axis of the wheel and the valve stem. The magnitude of the air pressure in duct 37 is controlled by a regulator 40 which is adjustable to allow a release to atmosphere of an air supply on a continuous monitoring basis so as to maintain a predetermined air pressure in the pneumatic tire assembly 41. The assembly 41 includes a tire rim 42 having a bead support flange section 42A by which a tire bead is supported and sealed in an air tight manner as is well known.

According to the embodiment of the invention shown in Figure 5, the piston 31 to thereby form a force intensifier is mechanically connected by a rod 44 which passes through air seals 45 and 46 to interconnect piston 31 with a piston 47. The piston 47 is much larger in diameter and mass than piston 31. Piston 47 reciprocates in a cylinder 48 between opposite end walls, one of which supports the seal 46. At the opposite end walls there are ducts 49 and 50. Duct 49 extends to the atmosphere, and thereby maintains atmospheric pressure in chamber 47B. Duct 50 is coupled to a valve 51 which controls the passage of air to and from chamber 47A. Valve 51 is pilot pressure operated.

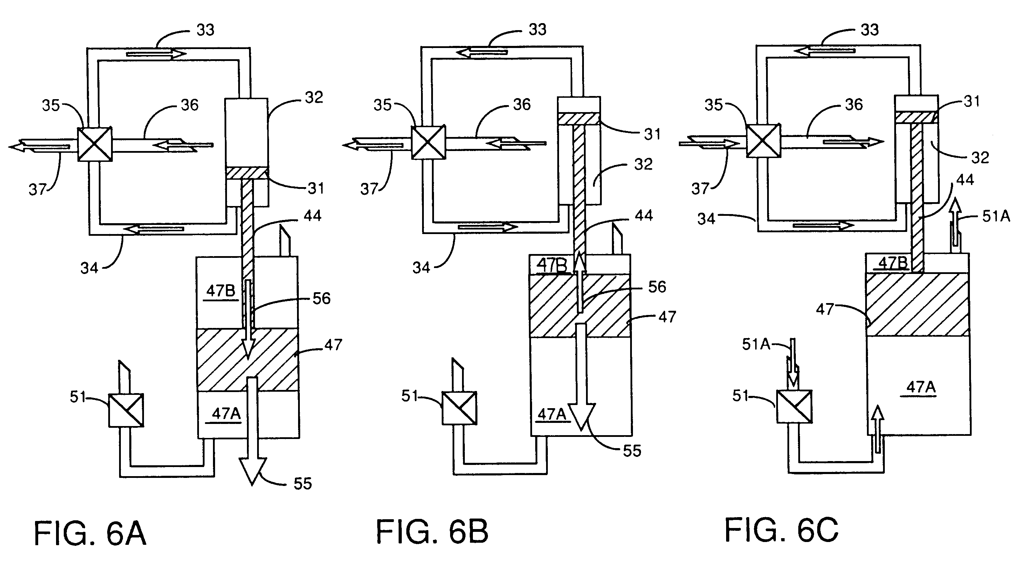

Figure 6A, 6B and 6C are schematic illustrations of the apparatus shown in Figure 5 to better illustrate the sequence of operation of pump apparatus as just described in Figure 5. In Figure 6A the relative position of the pump parts occurs in response to the resultant force to centrifugal force indicated by arrow identified by reference numeral 55 which acts in the same direction as gravitational force represented by an arrow identified by reference numeral 56. The resultant force acts in direction to force piston 47 to compress air in a chamber of 47A and forms a high pressure cushion. The force on piston 47 is imparted to piston 31 by the direct mechanical couple therewith by rod 44. Air pressurized by piston 47 is expelled from the end of cylinder 32 by duct 34 which is directed by valve 35 to duct 37 and thence to the tire. To allow displacement of piston 47, atmospheric air is in duct 36 is directed by valve 35 to duct 33 and thence to the piston end of piston 31.

The centripetal stroke is illustrated by Figure 6B. The centrifugal and gravitational forces are indicated by arrows and identified by reference numerals 55 and 56 respectively. As shown, the forces act in opposite directions. The gravitational force and the restoring force by the high pressure air cushion of chamber 47A are greater than the centrifugal force. This brings about a displacement of piston 47 and thereby also piston 31 to compress air in a chamber 32. The force on piston 47 imparted to piston 31 by the direct mechanical couple therewith pressurized air which is expelled from the end of cylinder 32 by duct 33. Air in duct 33 is directed by valve 35 to duct 37 and thence to the tire. To allow displacement of piston 47, atmospheric air in duct 36 is directed by valve 35 to duct 34 and thence to the rod end of piston 31.

In Figure 6C the pump reset position due to non-rotation of the wheel is depicted by the relative position of the parts. Valve 51 is open to air from the atmosphere in line 51A. The piston 47 moves in a direction to reduce the volume of chamber 47B. The force on piston 31 drives piston 47 by the direct mechanical couple therewith. Air is displaced by piston 31 to duct 33 and directed by valve 35 to atmosphere. Displacement of piston 31 causes a back-flow of air from pneumatic tire in duct 37 through valve 35 to duct 34 and thence to the rod end of piston 31. At the same time air is exhausted from the cylinder 32 by piston 31 through duct 33 and valve 35 to the atmosphere by duct 36.

If regulator 40 is not desired and if the conventional one way valve stem check valve is eliminated, the tire pressure can be directed to act on the pressure side of the pump to eliminate an excessive pressure in the tire. This is achieved in reference to, for example, in Figure 6A, by allowing that the pressure in duct 34 when applied in opposition to the tire pressure is such that the tire pressure is greater than the pressure in duct 34. When this occurs, the piston 31 is driven in response to the pressure differential along cylinder 32, thus also displacing piston 47 in a direction opposing the centrifugal force identified by reference numeral 55. The volume of air received in the cylinder at the rod end of piston 31 will be exhausted from the system when valve 35 assumes an operating condition where duct 34 communicates with duct 36. In this way, the quantity of air in the tire can be incrementally reduced until the pressure of the tire is equal and opposite to the pressure developed in the cylinder 32 through the operation of the pump of the present invention. Such excessive pressurization of the tire can be seen to occur when the tire operates at an elevated temperature for a period of time thus causing a temporary increase to the tire pressure due to air pressure changes because of the elevated temperature. After reducing to a normal atmospheric temperature, the tire pressure can be restored to a predetermined desired pressure through the operation of the pump of the present invention.

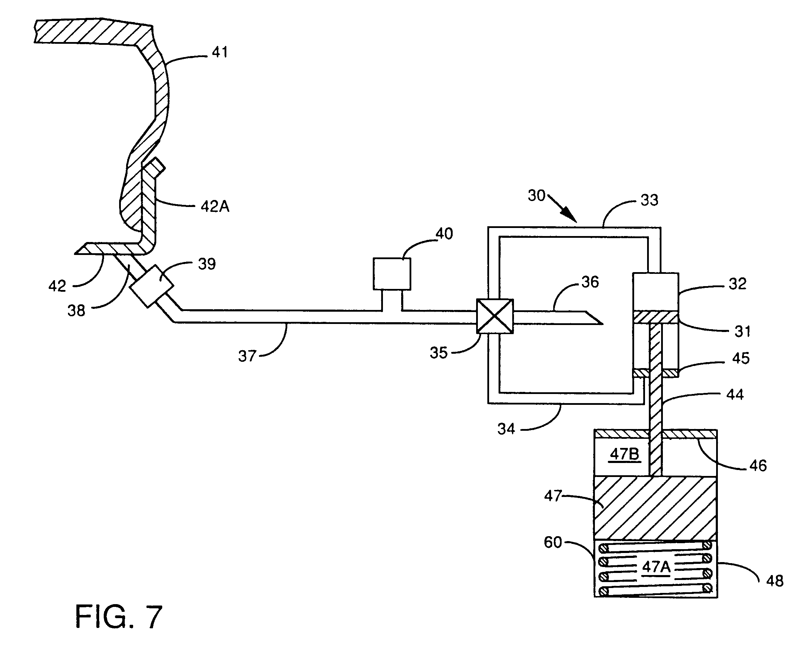

The pneumatic cushion provided by the operation of valve 51 and piston 47 serves to generate not only an intensified pressure acting on piston 31 but also provides a restoring force to the piston 31 in the mechanical system. Such a restoring force can however be accomplished by means other than an air cushion. An example of another means to provide a restoring force is shown in Figure 7. In Figure 7, parts which are the same as parts already described and shown in Figure 5 are identified by the same reference numerals. Piston 47 is acted upon by a spring 60 in response to gravitation forces. The resilient force of spring 60 is applied to piston 47 while situated in the chamber 47A. Spring 60 creates an effective cushion and also provides that a range of the stroke by the piston can be maximized for a narrow range of wheel velocities to take advantage of the spring harmonics.

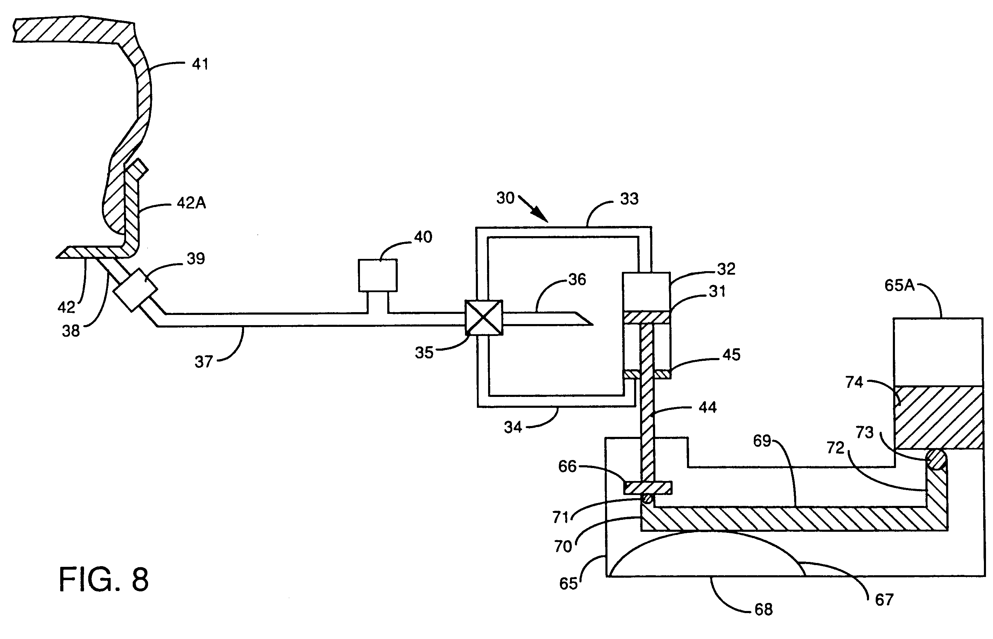

While not shown in the drawings, another form of cushion for the operation of piston 47 can be achieved by the combination of permanent magnetic inserts. One magnetic insert will be provided in the piston 47 and the magnetic insert of opposite polarity will be imbedded in the end wall of cylinder 48 adjacent of cushion chamber 47A. As will also be understood by those skilled in the art, a combination of air, magnetic and spring cushions may be utilized for the pump of the present invention. A further form of a cushion for the operation of the present invention shown in Figure 8, wherein a reference numeral applied to parts that are the same as parts already described in Figure 5 are identical and the description given heretofore is equally applicable.

In Figure 8, rod 44 extends from piston 31 into a chamber 65 where the free end of rod 44 is provided with a drive plate 66. A curve surface 67 generally in the form of a hyperbola is formed on a fulcrum support 68. Surface 67 contacts the midpoint of a lever 69 having at one end an upstanding leg 70 provided with a load bearing insert 71 in contact with drive plate 66. The opposite end of lever 69 has an upstanding leg 72 having a load bearing insert 73 contacting a lower surface of a counterweight mass 74 that can slide generally parallel with piston 31 in a chamber 65A forming an extension of chamber 65. In this embodiment, movement by the piston 31 is cushioned by mechanical system wherein the constant load provided by the counterweight mass 74 is transformed into an ever-changing force applied to rod 44 by the hyperbolic configuration of the surface 67. It can be seen that the effective length of the lever changes cyclically with the stroke of the piston.

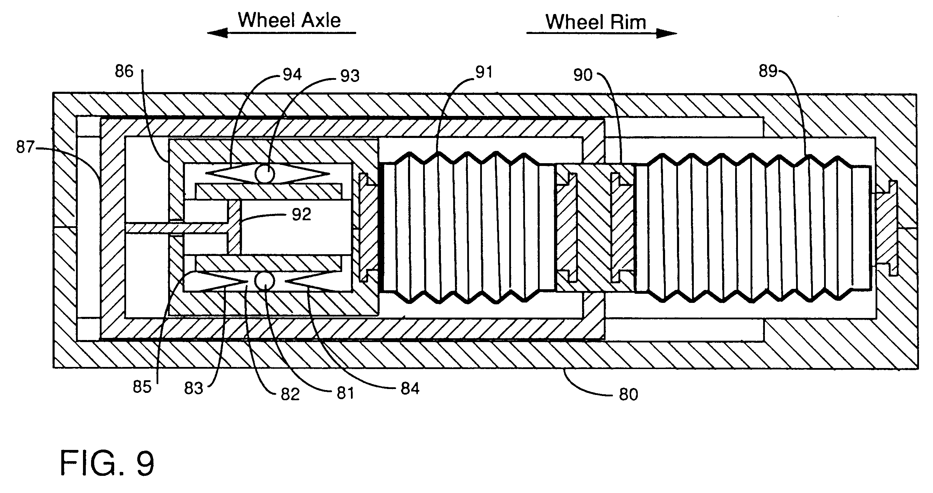

Shown in Figure 9 is another embodiment of the present invention. In this embodiment, a pump housing 80 is attached by way of an air duct to a valve stem. The air outlet duct communicates with an opening 81 formed in an outlet channel 82. The outlet channel 82 is closed at its opposite ends by one-way reed valves 83 and 84. These valves are situated in a chamber that is formed by a sleeve 85 which is attached to closed housing 86. Housing 86 is connected to pump housing 80. Connector 87 has a splined external surface which can slide within a mating spline surface in the pump housing 80. The end wall of housing 80 has a pocket to receive a connector of a high pressure bellows 89 that is in turn supported at its opposite end by a connector joined with a piston 90. Piston 90 can move back and forth while slidably supported in an opening formed in an end wall of connector body 87. Piston 90 is also joined by a connector to a low pressure bellows 91 that is in turn joined externally to an end wall of housing 86. Connector body 87 can reciprocate internally in the cavity of pump housing 80. During such reciprocating movement, a piston 92 attached at its rod end by body 87 and pass through an opening in end wall of housing 86 is caused to reciprocate in the internal cylindrical cavity of sleeve 85. Such reciprocating movement causes pressurization of atmospheric air that is fed through an opening 93 and passed through one-way reed valve 94. The atmospheric air emerging from the reed valve enters either the rod end or the piston end of piston 92 within sleeve 85.

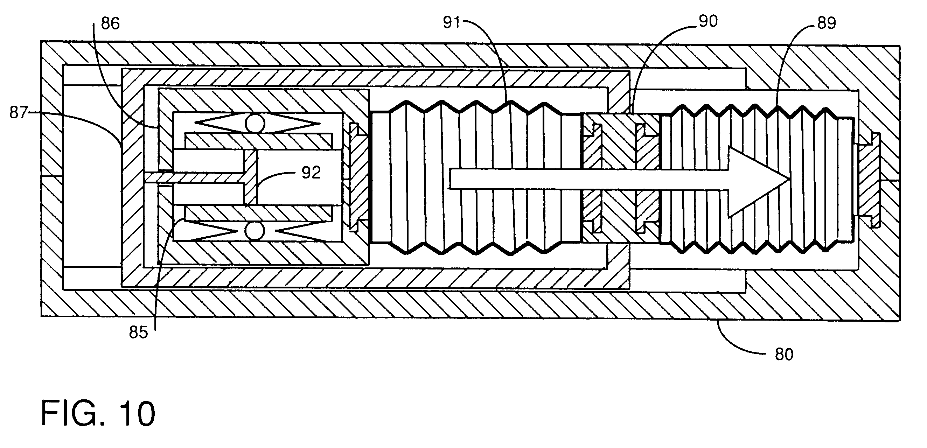

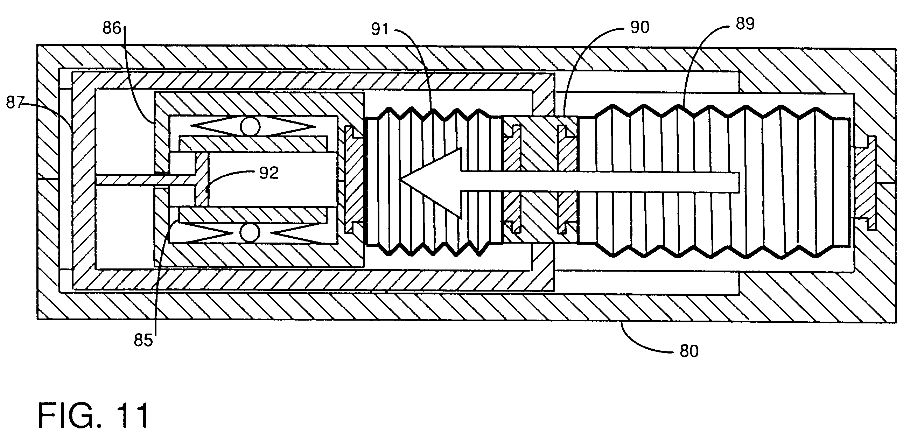

The operation of the embodiment of Figure 9 will be better understood when the following description is read in view of Figure 10. The two cushion chamber bellows 89 and 91 are used in the pump. One of the bellows are used to cushion the centrifugal force as the mass/connector/pump component slides toward the wheel rim and elongate the bellows 91. Because one end of the bellow 91 is attached to the closed housing 86 and the other to the piston 90, the elongation process causes a pressure drop inside the bellows below atmospheric pressure, resulting in a pressure differential that resists further elongation. The other bellows 89 are compressed between the pump housing 80 and the piston 90. As compression occurs the pressure increases inside of the bellows and the pressure differential resists further compression. Figures 10 and 11 show the sliding mechanism in two positions that have resulted from the addition of the centrifugal and gravitational forces at the bottom of wheel rotation, and the opposition the those two force at the top of wheel rotation, respectively.

Since the centrifugal force will always be greater than the gravitational force at vehicle speeds above a speed of 7 to 10 miles per hour, the low pressure bellows 91 will always be in an elongated position and the high pressure bellows 89 will be compressed. The degree of offset of the sliding mechanism comprising piston 90 from its static, non-operating position is a function of vehicle velocity and rate of wheel rotation. The variable gravitational force on the mechanism at a constant vehicle speed will be relatively small compared to the length of offset. The illustration of Figure 10 and 11 dramatize the degree of this variability. The piston 92 reciprocates inside a cylinder 85 that is designed to pump compressed air in both directions of its stroke. Air channels on either side of the cylinder containing the one-way reed valves provide for the inflow of atmospheric air on the expansion stroke side of the piston and the outflow of compressed air on the compression stroke side of the piston. The reed valves are an essential type of valve required to rapidly open and close as they are activated by small volumes of air. In addition, the valve faces that press together to prevent the reverse flow of air are flexible with maximum sealing area to prevent air-born particles from wedging them open. As described hereinbefore, the pistons 90 and 92 form an intensifier.

The pump compressed air output valve is connected directly to the tire valve. The tire valve mechanism is retained in the valve stem to insure that improper pump installation or operation does not cause tire deflation. An extension from the tire valve to the top of the pump housing allows for inflation of the tire using standard tire inflation connectors without removing the cyclic pump.

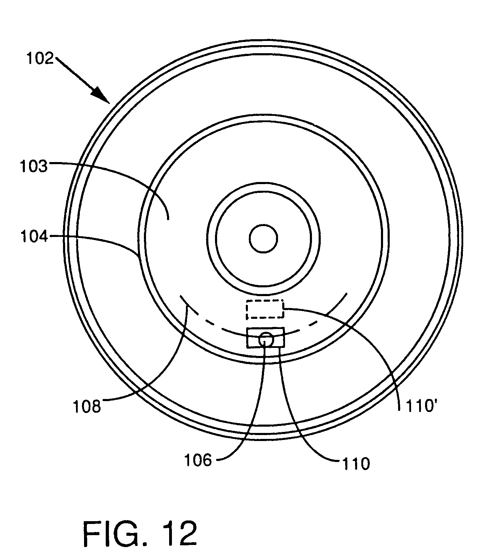

In Figure 12 tire-wheel assembly 102 comprising of a wheel 103, a rim 104 and a valve stem 106, useful by an automobile, truck or bus. Attached to the outer end of the stem 106 is a tire pressurizing and regulating apparatus 110 of the present invention. Although the apparatus 110 may be mounted on the outside of the wheel itself inward of the stem shown in outline form in Figure 12 at 10'. The apparatus 110 is arranged in tangential relationship with a circle 8 to a radial line passing through the center of the wheel. The apparatus 110 may be mounted internally of the wheel.

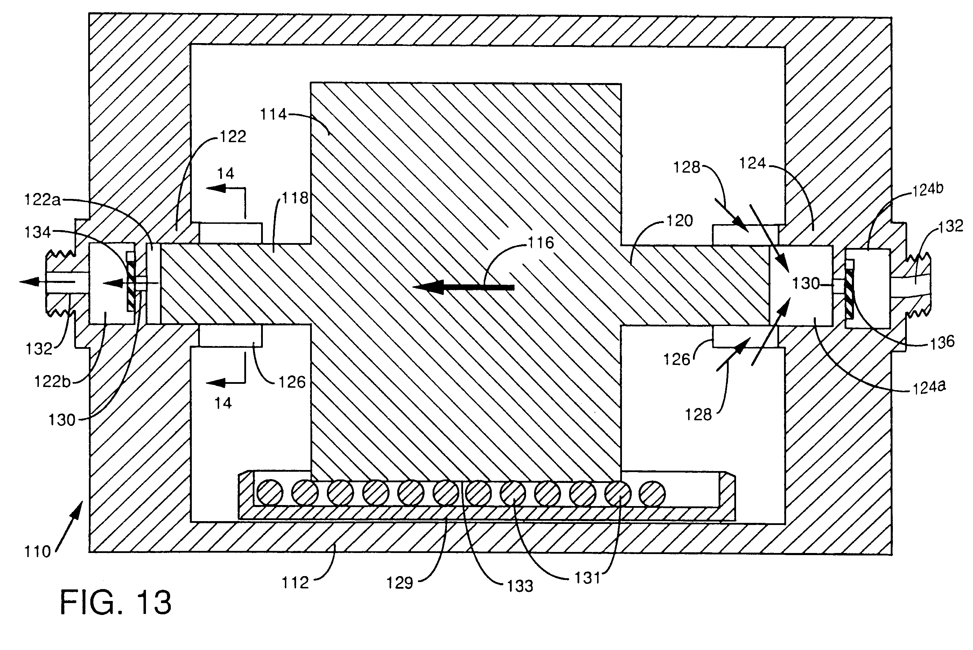

Turning to Figure 13, the tire pump/regulator apparatus 110 is arranged in a tangential position located eccentrically of the wheel axis, i.e., orientated outwardly and perpendicularly to a radial line passing through the axis of the wheel viewed from the front of the wheel as shown in Figure 12. As noted above, the relationship of the valve stem to the rim and wheel is co-planar to a radial line passing through the axis of rotation of the wheel. In the preferred position of the pump two air compression strokes during one revolution are created essentially by the gravitational force at the 90° and 270° positions, as will be more fully explained later. This design is found to have the advantage of providing a two stoke system that produces substantial mechanical leveraging to achieve high output pressures.

In Figure 13 the pump apparatus 110 including a cylinder pump body 112 for receiving an oscillating cylindrical shaped piston 114, one of its two directions of movements being indicated by arrow 116. Secured to the opposite axial sides of the piston 114 are two identical piston rods 101 and 120 having a substantially smaller diameter and a much smaller combined mass in comparison with the piston 114 to maximize use of the gravitational force during the working strokes. The ratio of the mass to the area of the ends of the piston rods creates a substantial concentrating working force at the ends of the piston rods.

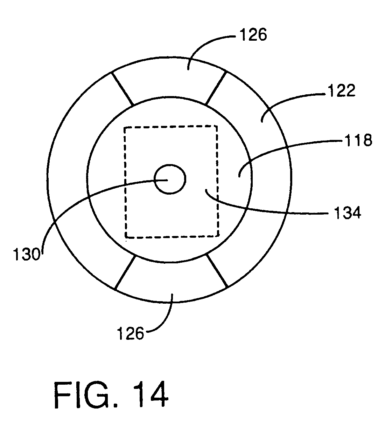

As shown in Figure 13, the outer end portion of the piston rods are received in cylinders 122 and 124 having inner most ends formed with two opposed slots 126, shown best in Figure 14. These slots, when the piston rods pass to the front of the cylinders allow atmospheric air to enter the cylinders as indicated by the arrows 121 at the right of Figure 13. At the left of Figure 13, it will be noted that the outer end of piston rod which is its power stoke position, blocks air from entering into the cylinder allowing the air to be compressed in the cylinder. The central piston 114 is supported by an anti-frictional surface, as indicated in Figure 13, on the side opposite the axis of the wheel, such as for example by a well known linear bearing 129 having a series of spaced apart cylindrical bearing elements 131 with their axes arranged transverse to the axis of the piston 114. The bearing, which may engage a flat surface 133 formed on the body, is employed to give stability to the body 114 and piston rods 118 and 120 and yet provide for anti-frictional properties during movement thereof and is mounted on the side of the piston 114 where the centrifugal force is the greatest.

The piston rods 18 and 120 operate with two tandemly arranged separate cylinders 122a and 122b and 124a and 124b, respectively. The cylinders 122a and 124a serve as compression cylinders, with one of the cylinders being connected to and carried by the outer end of the valve stem of the tire as shown in Figures 12 and 14, and both cylinders communicating with the valve stem via the cylinders 122b and 124b. The air pressure in the two cylinders 122b and 124b is always slightly higher than the tire pressure. The cylinders 122 and 124 are each provided with two inline passageways 130 and 132, the passageways 130 communicating with the cylinders 122a and 122b in one case and with 124a and 124b in the other case, while the passageway 132 communicates with the cylinders 122b and 124b and the valve stem. Between the cylinders 122a and 122b and 124a and 124b there are provided well known reed type check valves 134 and 136 located at the back walls of the cylinders 122b and 124b, which allow compressed air from the cylinders 122a and 124a to enter the cylinders 122b and 124b, respectively, and hence to the tire valve but prevent pressure in the cylinders 122b and 124b from passing to the cylinders 124a and 124b, respectively.

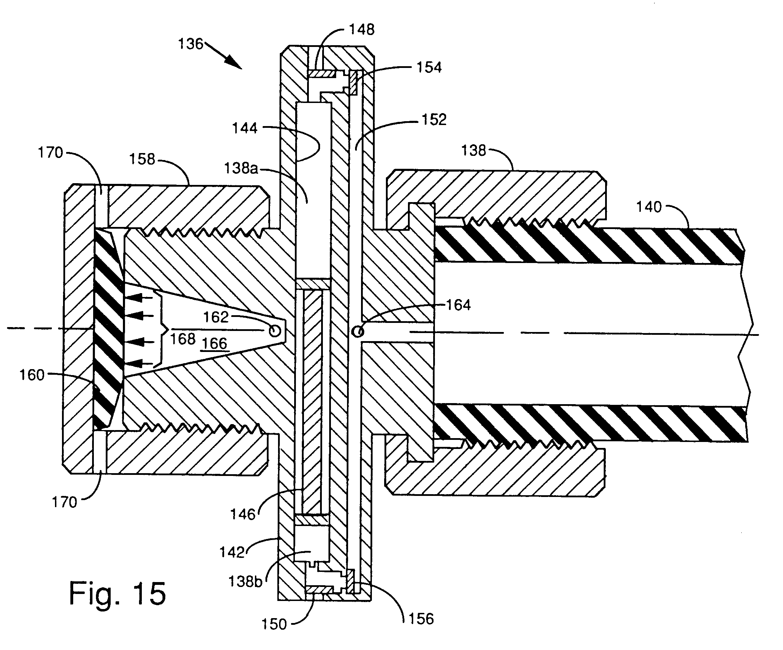

The piston 114 may be formed of several well known materials, such as metal or plastics. Preferably, the piston 114 is of plastic 1 inch in diameter and 1 inch long and the diameter of the piston rods 118 and 120 are 1/4 inch and a length of 1/2 inch. The mass ratio between the piston 114 and the two piston rods 118 and 120 under these conditions is 20:1. Such a design will deliver a minimum pump output of 1 PSI per hour at 40 miles per hour of vehicle speed. The tire valve, shown in Figure 15 may follow the common spring biased tire valve, but in the preferred form of the invention a second well known valve known as a Presta type valve is recommended, which instead of being held closed by a mechanical spring is held closed by the tire pressure and is used commonly in very high tire pressure applications. The connection and communication of the passageways 132 with the valve stem and the cooperation between the piston rods 111 and 120 and the passageways 130 and valve stem, along with other elements not yet described, will be explained below in connection with the embodiment of Figure 15, and which are intended to be incorporated where necessary in the Figure 13 embodiment. The employment of the slots 126 will eliminate the need of the reed valves 141 and 150 of Figure 15.

Both the positioning of the piston in its two working stroke positions and in effecting the working strokes gravity is harnessed and utilized. In the orbital rotation of the pump 110, the piston 114 will move with the pump body 112 and since the piston body is free to move relative to the pump body it will continuously reposition itself twice per revolution, i.e., the pump body will be caused to "free fall" from the top of the cylinder 112 to the bottom of the cylinder at the 90° and 270° positions as a result of its tangential location. At the same time air will be alternately admitted to the cylinders 122a or 124a by their associated slots 126 when their piston rods move to the front of the cylinders. During this continuous repositioning, the piston 114 is not subject to the centrifugal force being imposed on the pump body 112. It will be appreciated that during a complete orbital rotation of the pump, the gravitational force on the piston 114 may be considered constant and that the tangential arrangement of the piston allows gravity in the 90° and 270° positions to act in a downward purely vertical direction, thereby to create the two power strokes of the pump.

It is preferred to utilize a pump design, with reference to the volume of air that can be pumped as a result of the gravitational force, that would optimize its output operated at vehicle speeds from 30 to 50 miles per hour, which represent the speeds driven by the average commuting drive. The design can be modified to provide optimized outputs at other practical velocity ranges depending on the expected use of the vehicle.

Turning now to Figure 15, there is illustrated a further embodiment of a pneumatic tire pump/regulator apparatus according to the present invention. This particular apparatus will be also referred to as a free piston type cycloid pump or piston pump and is represented by number 136. The piston pump 136 includes an internally threaded attachment member, identified by numeral 31, for threadedly attaching the piston pump 136 to a valve stem 140 of a well known type which has been described above. As shown, the vertical axis of the pump piston 136, as one views Figure 15, is arranged perpendicularly to the horizontal axis of the valve stem 140, which in terms of the circular path of travel of the outer most end of the stem places the pump always in a tangential relationship to that path. Projecting from the attachment member 31 is a pump body 142 having an internal cylinder 144 in which an oscillating piston 146 is slidably received and arranged to form cylinder chambers 31a and 31b.

Ambient air is permitted to enter opposite ends of the cylinder 144 through vented reed or flapper check valves 41 and 150 to be introduced into the valve stem 140. An air supply channel 152 delivering air from the cylinder 144 to the valve stem 140 is provided at its opposite ends with additional reed or flapper check valves 154 and 156. A distal threaded end of pump body 142 threadedly receives a cap member 151, which compresses an elastomeric member 160 against a shoulder of the pump body 142. Passageways whose open ends are represented by openings 162 and 164 connect air supply channel 152 with a chamber 166 in pump body 142 which is sealed by elastomeric member 160.

The piston 146 operates within cylinder 144 of the pump body 142 and reciprocates back and forth in response to the gravitational force which arises through the rolling of a vehicle wheel to which the pump piston 136 is attached. In a typical stroke of the piston 146 traversing in the direction from the cylinder opening associated with check valve 41, air is drawn in through check valve 41 as cylinder 31a increases in volume. Simultaneously, the volume of chamber 31b decreases while its internal pressure is increased. Consequently, check valve 150 is held closed by the pressurized air exiting chamber 31b. This same pressurized air causes check valve 156 to open thereby enabling the pressurized air to pass from chamber 31b into air supply channel 152 and then into valve stem 140. Also during this stroke, check valve 154 is held closed by the elevated air pressure in air supply channel 152. This entire operation is reversed when the piston makes a stroke in the opposite direction. Hence, the piston pumps air into the valve stem during each of its two oppositely directed strokes.

The aforementioned passageway whose opposite ends are indicated by openings 162 and 164 equalizes the pressure in the valve stem/tire and in chamber 166. In addition, the material forming elastomeric member 160 is preferably formed of a relatively highly compressible elastomer such that it provides a positive seal between pump body 142 and cap member 151 up to the preset pressure and yet is compressible by any preset pressure, as indicated by arrows 161, to permit egress of over-pressurized air from chamber 166 through vents 170. The actual value of the predetermined pressure is merely a function of the degree to which the ring 60 is compressed between the pump body and the cap member, and this is determined by the amount which the pump body is threaded onto the cap member. In other words, the predetermined pressure can be accurately set by knowing how far the cap member 151 is threaded onto the pump body 142. This can be easily accomplished, for example, by aligning a mark provided on the pump body with any of a plurality indicia provided on the cap member which represent pressure values. In addition, air may be automatically bled in the event the tire pressure exceeds the preset due to excessive heating of the tire. Therefore, the preset pressure to be maintained in the tire can be simply adjusted by threading cap member onto the pump body 142 to achieve the desired level of compression in elastomeric member 160. Should this preset pressure be exceeded the compressible elastomeric member permits air to escape from chamber 166 through vents 170.

While the present invention has been described in connection with the preferred embodiments of the various figures, it is to be understood that other similar embodiments may be used or modifications and additions may be made to the described embodiment for performing the same function of the present invention without deviating therefrom. Therefore, the present invention should not be limited to any single embodiment, but rather construed in the terms of the appended claims.

## Claims

1. Apparatus for pressurising a pneumatic tire mounted on a wheel (102, 103), said apparatus comprising:
a displacement type air pump (110) including an oscillating unitary free piston mass (114) reciprocal along a line (116) by forces occurring with the rotational motion of a wheel (103) for generating air under pressure;
bearing means (129) for support of said piston mass during oscillation thereof within said pump;
mounting means (106, 110') adapted for attaching said pump to a pneumatic tire wheel (103); and
connection means (106, 132) adapted for introducing air under pressure generated from said pump into a pneumatic tire mounted on a wheel (103), characterised in that the bearing means are antifrictional and the pump is mounted with said line of piston reciprocation (116) positioned offset from centre and tangential with respect to a path (108) of wheel rotation.

2. The apparatus of claim 1 wherein said piston mass (114) includes a free piston reciprocal along said line (116) within a cylinder (112).

3. The apparatus of claim 2 wherein said piston (114) and cylinder (112) are constructed and arranged so that gravitational force will displace said piston (114) in said cylinder (112) to effect an air pressure working stroke for said pump (110).

4. The apparatus of claim 2 or 3 wherein said pump (110) includes an opposing connected pair of said pistons (118, 120) reciprocal along said line in respective cylinders (122, 124) and thereby providing a double action piston assembly.

5. The apparatus of claim 4 wherein said double action piston assembly includes a central piston member (114) with said opposing pistons (118, 120) operatively connected hereto, said central piston member (114) having a mass substantially greater than both of said opposing pistons.

6. The apparatus of claims 1 to 5 including a pneumatic tire (102) mounted on a wheel with said pump (110) operatively secured to said wheel (103) and connected to said tire for pressurisation.

7. The apparatus of claims 1 to 6 including means operably connected to said pump (110) for establishing and maintaining air pressure in the tire at a predetermined level.

8. The apparatus of claim 5 wherein said bearing means (129) antifrictionally supports said central piston member (114) during oscillation thereof.

9. The apparatus of claim 8 wherein said bearing means (129) is comprised of a linear bearing having spaced apart rotatable bearing elements (131).

10. The apparatus of claim 8 or 9 wherein said bearing means (129) is located on a side of said central piston member (114) furthest away from the axis of a wheel (102) on which said pump is to be mounted.

11. The apparatus of any one of claims 5 to 10 wherein said pump (110) includes means (134, 136) for permitting introduction of air into and discharge of air from the said cylinders, whereby when said piston member (114) is caused by said forces to move in one direction, air is drawn into a first (122a) of said two cylinders while simultaneously discharging pressurised air from a second (124a) of said two cylinders for discharge into a pneumatic tire, and when said piston member is caused by said forces to move in a second direction air is drawn into said second cylinder (124a) while simultaneously discharging pressurised air from said first cylinder (122a) for discharge into a pneumatic tire.

12. The apparatus of any of claims 1 to 11 wherein the piston member (114) is acted upon by an air cushion for providing a restoring force.

13. The apparatus according to claim 12 further including means (35) for controlling the supply of pressurised air to the pneumatic tire by said pump and to prevent pressurising the pneumatic tire beyond a predetermined tire pressure.

14. The apparatus according to claim 13 wherein said means for controlling includes a control valve (35).

15. The apparatus according to claim 12, 13 or 14 wherein said pump further includes an intensifier piston (47) reciprocal with said piston mass in response to cyclic differences to the resultant force.

16. The apparatus of claim 15 wherein said pump further includes a pivotal lever (69) and a fulcrum support (68), said lever connected at one end to the pump piston and at the other end to the intensifier piston, said lever and said fulcrum support including cooperating structure for enabling reciprocal oscillation of said piston driven pump in response to pivotal oscillation of said lever.

17. The apparatus of claim 16 wherein said pump further includes a cylinder having first and second ends and said reciprocally oscillatable intensifier piston (47) is slidably received in said second cylinder.

18. The apparatus of claim 17 wherein said fulcrum support (68) includes a surface (67) for cylindrically changing the effective length of the lever with respect to pivoting thereof.

19. The apparatus according to any one of claims 12 to 18 wherein said air cushion includes a piston member (90) reciprocable in a housing (86) while joined with a connector (87), one end of the connector being coupled to said piston and the other end of the connector being coupled to said piston member.

20. The apparatus according to any one of claims 12 to 19 wherein said piston member (90) is reciprocable in the housing (86) against bellows (89, 91).

21. The apparatus according to claim 15 wherein said intensifier piston (47) is reciprocable in a sleeve (85) supported in a pump housing (80), and wherein said intensifier piston can slide to and fro within a pump housing.

22. The apparatus according to claim 20 wherein said bellows comprises a high pressure (89) and a low pressure (91) bellows coupled end-to-end.

23. The apparatus according to claim 13 wherein said means for controlling includes a reed valve (94).

24. The apparatus according to claim 15 wherein said intensifier piston (47) includes a large diameter piston having a mass which is large in relation to the diameter and mass of the piston of said pump.

25. The apparatus according to claim 12 wherein said air cushion includes a high pressure bellows (89) and a low pressure bellows (91) acted upon by a piston while coupled to the piston of said pump.

26. The apparatus according to claim 13 wherein said means (35) for controlling includes inlet and outlet valves.

27. The apparatus according to claim 13 wherein said means (35) for controlling includes an air pilot pressure operated valve.

28. The apparatus according to claim 12 wherein said piston reciprocates along a path of travel extending radially from the axis of rotation by said vehicle wheel.

**Patentansprüche**

1. Apparat zur Druckbeaufschlagung eines auf einem Rad (102, 103) montierten Luftreifens, wobei der Apparat besteht aus:

    einer Luftpumpe vom Verdrängertyp (110) zur Erzeugung von Druckluft mit einer schwingenden, eine Einheit bildenden freien Kolbenmasse (114), die entlang einer Linie (116) durch Kräfte hin- und herbewegt wird, die bei der Drehbewegung eines Rades (103) auftreten;

    einem Lagermittel (129), durch das die Pumpenmasse während der Schwingung in der Pumpe gelagert wird;

    einem Montagemittel (106, 110'), das auf die Befestigung der Pumpe an einem Luftreifenrad (103) ist; und

    Verbindungsmittel (106, 132), die so ausgelegt sind, daß sie die Druckluft, die von der Pumpe erzeugt wird, in einen auf einem Rad (103) montierten Luftreifen einleiten, dadurch gekennzeichnet, daß die Lagermittel als Wälzlager ausgeführt sind und die Pumpe außermittig und tangential zur Bahn (108) der Raddrehung in der Linie der Hin- und Herbewegung des Kolbens (116) plaziert ist.

2. Apparat nach Anspruch 1, wobei die Kolbenmasse (114) einen freien Kolben enthält, der entlang der Linie (116) in einem Zylinder (112) hin- und herbewegt wird.

3. Apparat nach Anspruch 2, wobei der Kolben (114) und der Zylinder (112) so konstruiert und angeordnet sind, daß die Gravitationskraft den Kolben (114) in dem Zylinder (112) verdrängt, so daß ein Luftdruck-Arbeitshub für die Pumpe (110) entsteht.

4. Apparat nach Anspruch 2 oder 3, wobei die Pumpe (110) ein sich gegenüberliegendes verbundenes Paar Kolben (118, 120) enthält, die sich entlang der besagten Linie in ihren jeweiligen Zylindern (122, 124) hin- und herbewegen und damit eine doppeltwirkende Kolbeneinheit bilden.

5. Apparat nach Anspruch 4, wobei die doppeltwirkende Kolbeneinheit ein zentrales Kolbenelement (114) enthält, mit dem die sich gegenüberliegenden Kolben (118, 120) funktionell verbunden sind, wobei das zentrale Kolbenelement (114) eine wesentlich größere Masse besitzt als die beiden sich gegenüberliegenden Kolben.

6. Apparat nach Anspruch 1 bis 5 mit einem Luftreifen (102), der auf einem Rad in der Pumpe (110) montiert, funktionell an dem Rad (103) befestigt und zur Druckbeaufschlagung mit dem Reifen verbunden ist.

7. Der Apparat nach Anspruch 1 bis 6 schließt ein Mittel ein, das funktionell mit der Pumpe (110) verbunden ist, um in dem Reifen einen Luftdruck von definierter Höhe zu erzeugen und aufrechtzuerhalten.

8. Apparat nach Anspruch 5, wobei das zentrale Kolbenelement (114) während seiner Schwingung in dem Lagermittel (129) wälzgelagert ist.

9. Apparat nach Anspruch 8, wobei das Lagermittel (129) aus einem linearen Lager mit im Abstand angebrachten, drehbaren Lagerelementen (131) besteht.

10. Apparat nach Anspruch 8 oder 9, wobei das Lagermittel (129) möglichst weit weg von der Achse eines Rads (102), auf dem die Pumpe montiert werden soll, auf einer Seite des zentralen Kolbenelements (114) plaziert ist.

11. Apparat nach einem der Ansprüche 5 bis 10, wobei die Pumpe (110) Mittel (134, 136) enthält, die die Einleitung von Luft in und die Ausleitung von Luft aus den Zylindern gestatten, wobei, wenn das Kolbenelement (114) durch die Kräfte in die eine Richtung bewegt wird, Luft in den ersten (122a) der beiden Zylinder gesaugt wird, während gleichzeitig Druckluft zur Einleitung in einen Luftreifen aus dem zweiten (124a) der beiden Zylinder ausgestoßen wird, und wenn das Kolbenelement durch die Kräfte in eine zweite Richtung bewegt wird, Luft in den zweiten Zylinder (124a) gesaugt wird, während gleichzeitg Druckluft zur Einleitung in einen Luftreifen aus dem ersten Zylinder (122a) ausgestoßen wird.

12. Apparat nach einem der Ansprüche 1 bis 11, wobei ein Luftkissen auf das Kolbenelement (114) wirkt und so eine Rückstellkraft ausübt.

13. Apparat nach Anspruch 12, bei dem zusätzlich ein Mittel (35) vorgesehen ist, das die Druckluftzufuhr zum Luftreifen durch die Pumpe regelt und eine Beaufschlagung des Luftreifens mit einem höheren als dem definierten Reifendruck verhindert.

14. Apparat nach Anspruch 13, wobei das Regelmittel ein Regelventil (35) enthält.

15. Apparat nach Anspruch 12, 13 oder 14, wobei die Pumpe zusätzlich einen Verstärkerkolben (47) enthält, der sich zusammen mit der Kolbenmasse in Reaktion auf zyklische Unterschiede zur resultierenden Kraft hin- und herbewegt.

16. Apparat nach Anspruch 15, wobei die Pumpe zusätzlich einen Schwenkhebel (69) und einen Hebelträger (68) enthält, wobei der Hebel am einen Ende mit dem Pumpenkolben und am anderen Ende mit dem Verstärkerkolben verbunden ist und der Hebel und der Hebelträger eine zusammenwirkende Konstruktion enthalten, die ein Hin- und Herschwingen der kolbengetriebenen Pumpe in Reaktion auf die Schwenkschwingung des Hebels ermöglicht.

17. Apparat nach Anspruch 16, wobei die Pumpe zusätzlich einen Zylinder mit einem ersten und zweiten Ende enthält und der schwingfähige Verstärkerkolben (47) gleitend in den zweiten Zylinder aufgenommen wird.

18. Apparat nach Anspruch 17, wobei der Hebelträger (68) eine Oberfläche (67) zur zylindrischen Änderung der effektiven Länge des Hebels in bezug auf seine Drehung enthält.

19. Apparat nach einem der Ansprüche 12 bis 18, wobei das Luftkissen ein Kolbenelement (90) enthält, das in einem Gehäuse (86) hin- und herbewegt werden kann, während es mit einem Verbindungsteil (87) verbunden ist, wobei ein Ende des Verbindungsteils mit dem Kolben und das andere Ende des Verbindungsteils mit dem Kolbenelement verbunden ist.

20. Apparat nach einem der Ansprüche 12 bis 19, wobei das Kolbenelement (90) im Gehäuse (86) gegen Faltenbalge (89, 91) hin- und herbewegt werden kann.

21. Apparat nach Anspruch 15, wobei der Verstärkerkolben (47) in einer Hülse (85), die in einem Pumpengehäuse (80) gelagert ist, hin- und herbewegt werden kann und wobei der Verstärkerkolben in einem Pumpengehäuse hin- und hergleiten kann.

22. Apparat nach Anspruch 20, wobei der Faltenbalg aus einem Hochdruck-Faltenbalg (89) und einem Niederdruck-Faltenbalg (91) besteht, die endweise miteinander verbunden sind.

23. Apparat nach Anspruch 13, wobei der das Regelmittel ein Klappenventil (94) einschließt.

24. Apparat nach Anspruch 15, wobei der Verstärkerkolben (47) einen Kolben mit großem Durchmesser aufweist, dessen Masse im Verhältnis zum Durchmesser und zur Masse des Kolbens der Pumpe groß ist.

25. Apparat nach Anspruch 12, wobei das Luftkissen einen Hochdruck-Faltenbalg (89) und einen Niederdruck-Faltenbalg (91) einschließt, auf die ein Kolben wirkt, während es mit dem Kolben der Pumpe verbunden ist.

26. Apparat nach Anspruch 13, wobei das Regelmittel (35) Ein- und Auslaßventile einschließt.

27. Apparat nach Anspruch 13, wobei das Regelmittel ein durch Vorsteuerluftdruck betätigtes Ventil enthält.

**28.** Apparat nach Anspruch 12, wobei sich der Kolben entlang einer Bahn hin- und herbewegt, die radial zur Drehachse des Fahrzeugrades verläuft.

## Revendications

**1.** Appareil pour la pressurisation d'un pneumatique monté sur une roue (102, 103), ledit appareil comprenant :

une pompe à air de type volumétrique (110) comportant une masse piston libre unitaire oscillante (114) ayant un mouvement alternatif le long d'une ligne (116), sous l'effet des forces engendrées par la rotation d'une roue (103) afin de produire de l'air sous pression ;

des paliers (129) pour soutenir les oscillations de ladite masse piston dans ladite pompe ;

des moyens de fixation (106, 110') adaptés pour fixer ladite pompe à une roue pourvue d'un pneumatique (103) ; et

des raccords (106, 132) adaptés pour introduire l'air sous pression produit par ladite pompe dans un pneumatique monté sur une roue (103), caractérisé en cela que les paliers sont de type anti-friction et que la pompe est montée de façon que ladite ligne de mouvement alternatif du piston (116) soit décentrée et tangentielle par rapport au trajet de rotation de la roue (108).

**2.** L'appareil de la revendication 1, dans lequel ladite masse de piston (114) comprend un mouvement alternatif de piston libre le long de ladite ligne (116) à l'intérieur d'un cylindre (112).

**3.** L'appareil de la revendication 2, dans lequel lesdits piston (114) et cylindre (112) sont construits et disposés de façon que la force de gravitation déplace ledit piston (114) dans ledit cylindre (112) pour engendrer une course de travail de pressurisation de l'air pour ladite pompe (110).

**4.** L'appareil de la revendication 2 ou 3, dans lequel ladite pompe (110) comprend une paire de pistons (118, 120) connectés à l'opposé l'un de l'autre et ayant un mouvement alternatif le long de ladite ligne dans leurs cylindres respectifs (122, 124) et constituant de cette façon un ensemble piston à double effet.

**5.** L'appareil de la revendication 4, dans lequel ledit ensemble piston à double effet inclut un corps de piston central (114) auquel lesdits pistons opposés (118, 120) sont raccordés activement, ledit corps de piston central (114) ayant une masse substantiellement supérieure à celle desdits pistons opposés.

**6.** L'appareil des revendications 1 à 5, y compris un pneumatique (102) monté sur une roue avec ladite pompe (110) fixée activement à ladite roue (103) et connectée au dit pneumatique pour le pressuriser.

**7.** L'appareil des revendications 1 à 6, y compris des moyens installés sur ladite pompe (110) pour établir et maintenir une pression d'air à un niveau prédéterminé dans le pneumatique.

**8.** L'appareil de la revendication 5, dans lequel ledit palier (129) fournit un appui anti-friction audit corps central de piston (114) durant l'oscillation de celui-ci.

**9.** L'appareil de la revendication 8, dans lequel ledit palier (129) est constitué d'un palier linéaire comportant des éléments de roulement rotatifs espacés les uns des autres (131).

**10.** L'appareil de la revendication 8 ou 9, dans lequel ledit palier (129) est situé sur le côté dudit corps de piston central (114) le plus écarté de l'axe de la roue (102) sur laquelle ladite pompe doit être installée.

**11.** L'appareil de n'importe laquelle des revendications 5 à 10 dans lequel ladite pompe (110) comprend des moyens (134, 136) permettant l'admission et le refoulement de l'air dans et hors desdits cylindres, de façon que, quand ledit corps de piston (114) se déplace dans une direction sous l'effet desdites forces, l'air soit aspiré dans le premier (122a) des deux cylindres susmentionnés, alors que simultanément l'air sous pression du second (124a) des deux cylindres susmentionnés est refoulé dans le pneumatique, et quand ledit corps de piston se déplace dans l'autre direction sous l'effet desdites forces, l'air soit aspiré dans le second cylindre susmentionné (124a) alors que l'air pressurisé est simultanément refoulé du premier cylindre susmentionné (122a) dans le pneumatique.

**12.** L'appareil de n'importe laquelle des revendications 1 à 11, dans lequel le corps de piston (114) fait l'objet d'un effet de coussin d'air pour fournir une force de rétablissement.

**13.** L'appareil selon la revendication 12, comportant en outre des moyens (35) pour contrôler l'alimentation d'air sous pression appliquée au pneumatique par ladite pompe et pour éviter la pressurisation du pneumatique au-delà d'une pression de gonflage prédéterminée.

**14.** L'appareil selon la revendication 13, dans lequel ledit moyen de contrôle comprend une valve de contrôle (35).

**15.** L'appareil selon la revendication 12, 13 ou 14, dans lequel ladite pompe comprend en outre un piston intensificateur (47) ayant un mouvement alternatif opposé à ladite masse de piston en réponse aux différences cycliques issues de la force résultante.

16. L'appareil de la revendication 15, dans lequel ladite pompe comprend en outre un levier pivotant (69) et un axe de pivot (68), ledit levier étant connecté à un bout au piston de la pompe et à l'autre bout au piston intensificateur, ledit levier et ledit pivot comportant une structure coopérante permettant l'oscillation alternative de ladite pompe entraînée par le piston en réponse à l'oscillation pivotante dudit levier.

17. L'appareil de la revendication 16, dans lequel ledit piston comprend en outre un cylindre ayant une première et une seconde extrémité et dans lequel le piston intensificateur à mouvement oscillant alternatif (47) pénètre par coulissement dans ledit second cylindre.

18. L'appareil de la revendication 17, dans lequel ledit pivot (68) comprend une surface (67) pour modifier cylindriquement la longueur réelle du levier par rapport au pivotement de celui-ci.

19. L'appareil selon n'importe laquelle des revendications 12 à 18, dans lequel ledit coussin d'air inclut un corps de piston (90) ayant un mouvement alternatif dans un logement (86), tout en étant doté d'un raccord (87), une extrémité du raccord étant accouplée audit piston et l'autre extrémité du raccord étant accouplée audit corps de piston.

20. L'appareil selon n'importe laquelle des revendications 12 à 19, dans lequel ledit corps de piston (90) a un mouvement réciproque dans le logement (86) à l'encontre de soufflets (89, 91).

21. L'appareil selon la revendication 15, dans lequel ledit piston intensificateur (47) a un mouvement réciproque dans un manchon (85) porté dans un logement de pompe (80), et dans lequel ledit piston intensificateur peut coulisser dans un sens et dans l'autre à l'intérieur d'un logement de pompe.

22. L'appareil selon la revendication 20, dans lequel les soufflets susmentionnés sont constitués d'un soufflet haute pression (89) et d'un soufflet basse pression (91) connectés à leurs extrémités.

23. L'appareil selon la revendication 13, dans lequel ledit moyen de contrôle comprend une valve à lame (94).

24. L'appareil selon la revendication 15, dans lequel ledit piston intensificateur (47) comprend un piston ayant un diamètre et une masse importants par rapport au diamètre et à la masse du piston de ladite pompe.

25. L'appareil selon la revendication 12, dans lequel ledit coussin d'air comprend un soufflet à haute pression (89) et un soufflet à basse pression (91) connectés au piston de ladite pompe et sur lesquels agit un piston.

26. L'appareil selon la revendication 13, dans lequel ledit moyen de contrôle (35) comprend des valves d'admission et de refoulement.

27. L'appareil selon la revendication 13, dans lequel ledit moyen de contrôle (35) comprend une valve actionnée par une pression d'air pilote.

28. L'appareil selon la revendication 12, dans lequel ledit piston accomplit un mouvement alternatif sur une course s'étendant radialement à partir de l'axe de rotation de ladite roue de véhicule.

FIG. 1

0° Rotation

60° Rotation

180° Rotation

18

16

14

10

12

R1

20

10    14

18

12

16

R2

10

14

R3

12

18

16

EP 0 600 037 B1

14

( 35 MPH, 14" Wheel & 7" Valve Radii )

FIG. 2

Inches Per Second Squared ( Thousands )

Degrees Of Wheel Rotation

EP 0 600 037 B1

( 35 MPH, 2.7 Ounces Mass At Valve )

FIG. 3

( 14" Wheel, 7" Valve Radius )

Air Output In Cubic Inches / Minute

Vehicle Velocity In Miles Per Hour

FIG. 4

17

FIG. 5

EP 0 600 037 B1

FIG. 6A

FIG. 6B

FIG. 6C

FIG. 7

FIG. 8

EP 0 600 037 B1

Wheel Axle ← → Wheel Rim

FIG. 9

EP 0 600 037 B1

FIG. 10

FIG. 11

EP 0 600 037 B1

FIG. 12

FIG. 13

EP 0 600 037 B1

FIG. 14

Fig. 15